# EUROPEAN PATENT SPECIFICATION

(11) **EP 0 760 175 B1**
(45) Date of publication and mention of the grant of the patent: **14.04.1999**
(21) Application number: 94928908.6
(22) Date of filing: 11.10.1994
(51) Int. Cl.: H02G 3/00

(54) **ELECTRIC INSTALLATION SYSTEM FOR A BUILDING**
ELEKTROINSTALLATIONSEINRICHTUNG FÜR GEBÄUDE
SYSTEME D'INSTALLATIONS ELECTRIQUES POUR BATIMENTS

(30) Priority: 12.10.1993 FI 934504
(43) Date of publication of application: 05.03.1997
(73) Proprietor: PK Cables OY, 90440 Kempele (FI)
(72) Inventor: NYYSSÖLÄ, Jari, FIN-90450 Kempele (FI)
(74) Representative: Dahlström, Karl Krister
(86) International application number: FI9400456
(87) International publication number: WO9510871

(56) References cited:
- WO-A-92/07396
- DE-A- 3 719 384
- GB-A- 1 394 406
- US-A- 4 689 493
- US-A- 4 775 802

## Description

The invention relates to an electric installation system for a building or a portion of a building, comprising a distribution terminal and one or more chains of outlets connected to the distribution terminal, each chain of outlets comprising several outlets and cable sections for connecting the outlets to each other and to the distribution terminal, in which system the outlets are e.g. wall sockets and light points and which system further comprises switching means for performing the switching operations of at least the light points, said switching means being connected to perform switching operations through a control current path and additionally through a control unit.

Electric installation systems presently in use are based on the idea of transferring energy to an outlet, such as a light point, and controlling the operation of the outlet, i.e. the switching operation, over the same conductors. For instance, the switching operation of light points is performed by circulating current from a distributing box positioned on the wall close to the ceiling to a light switch positioned lower on the wall back to the distributing box and further to a ceiling light fitting. Transfer of energy and the control function, i.e. the current message of the switching operation, thus take place in the same common physical current conductors.

In conventional electric installation systems known from the prior art, the conductor section of a chain of outlets is formed by a cable obtained from a reel and cut into a suitable length on a building site. The ends of individual conductors are stripped at the cable ends, and the conductor ends are then joined by screws e.g to the switch box of a light fitting, to a wall socket, light switch or e.g. to a distribution terminal. In this conventional system, one way to install a cable is to position it within a protective conduit, wherefore the previously known systems do not comprise any plug connectors. In known solutions, the chain of outlets comprises branches deviating sidewardly from the main direction of the chain. In one example of such a solution, a wall socket is inserted in a chain of light points by means of a branch. Another example is to form a chain of light points, for instance, by dividing a chain of outlets into several different branches from a distributing box connected to a cable coming from the direction of the distribution terminal. A major drawback of positioning a wall socket in the chain of light points is that the fuse group feeding the chain of light points has to be designed so that it will also withstand a load imposed on it through the wall socket, and therefore the number of fuses and the current supply capacity will be considerably higher than what the light fittings alone would require, which in turn increases costs.

In known systems the requirement of installation material and installation work is very high and the system is nevertheless extremely poorly controllable. In known systems, the control function of a ceiling light, for instance, i.e. switching the current on and off, requires a switch or light switch, a cover plate, an apparatus box for the light switch, a length of relatively thick current conductor, a distributing box and connectors. In addition, the apparatus box has to be attached to vertical frame structures inside the wall panelling. A special drawback of the apparatus box is that it requires an installation depth of almost 60 mm.

For temporary uses such as on-the-site installations, exhibition departments and shop installations, it is known to use a cable consisting of plug connectors and conductors. Several such cables are connected to each other and to distribution units, while the outlets and switches are connected to the distribution units as branches. In this solution, however, the cable comprising the plug connectors is formed in the conventional way on the installation site by using a cable taken from a reel in required lengths, to which cable the plug connectors are attached by screw joints. In this known solution, the structure is not integral but can be disassembled. Installation is performed in this solution and in the installation system obtained by means of it in the conventional way, as the switching operations are performed in the conventional way and the chain of outlets forms a star-like network with branches. The drawbacks of this solution are mainly similar to those of the conventional system described above.

US Patent 5,043,531 discloses a system where intelligence, such as a micro circuit, is integrated in light switches, controllers or light fixtures. As to the connections between the cable sections and the outlets of the chain of outlets, this system is realized in the conventional way. The system comprises a weak-current path electrically separate from the energy transfer path, i.e. the power cable. The operational design values of the switches can be altered through the weak-current path. In this solution, the control current path or weak-current path, which is electrically separate from the power cable, is, however, formed in the same cable fixedly within the same protective sheath as the power cable, and therefore the ways of wiring the outlets and control points have to be closely related, so that the outlet and control-switch operations cannot be implemented as separate connections, which in turn makes it difficult to attain a cost-effective structure. This solution is expensive and therefore applicable mainly only when existing electrical installations have to be altered constantly.

The use of modular cable harnesses with fixed plug connectors is known from US- A-4 775 802.

An electric installation system according to the preamble of the attached claim 1 is known from US- A- 4 689 493. In this system the control current path is separate from the power circuit feeding the chains of outlets, but traditional cables are used for the wiring. At the installation site the cable insulation must be stripped at the ends and the cable conductors are connected by screws or the like to a switch box and other system components. Changes to the system require changes to the physical couplings between conductors in the control unit.

Another electric installation system using separate power and control circuits is known from GB- A- 1 394 406.

The object of the present invention is to provide a new electric installation system, which avoids the problems associated with the known solutions.

This object is achieved by an electric installation system according to the invention, which is characterized in that the cable sections in the chains of outlets are formed by industrially produced cable harnesses cut into predetermined length and provided with fixed plug connectors, and that the control current path is separate from the cable harness and provided with a separate protective sheath, and that the switching means and the control current path, which are separate from the cable- harness- structure chain of outlets for energy transfer to the light points, are connected to control the cable- harness- structure chain of outlets connected to the distribution terminal through the control unit at the distribution terminal, and in which installation system the control unit controls the switching of current to the light point chains on the basis of set values of the control unit by means of relays or the like power switches.

An essential aspect of the present invention is the use of an industrially produced cable harness cut into predetermined lengths and provided with fixed plug connectors in electrical installations of buildings. The electrical installation system according to the invention and the installation method used in it are based on the use of the industrially produced cable harness with specified dimensions and fixed plug connectors and on a completely new string-like outlet chain structure enabled by the cable harness, and further on implementing switching operations in a way enabled by the new outlet chain structure by means of a control current path and a control unit separate from the transfer of energy so that a switching means positioned on the wall of a room performs the switching operation through the control current path and logic means in conjunction with the distribution terminal e.g. by controlling relays which switch on and off phase conductors to the cable harnesses of the outlet chains. That the control current path is separate from the energy transfer of light points, i.e. from cable-harness-structure chains of light outlets, means that the control current path is, as is known, galvanically or electrically separated from the outlet chain, in addition to which it is also according to the invention physically separate, i.e. has a separate protective sheath.

The solution according to the invention provides several advantages; in particular, it speeds up installations considerably, labour power being needed in the wiring of a one-family house, for instance, only when outlet chains are formed by connecting the plug connectors of cable harnesses to each other and to actual outlets, such as light fittings and wall sockets. The Applicant has observed that the time required for electric installations of a one-family house of ordinary size will decrease from a little less than two weeks to less than three days, which involves a considerable saving of labour costs. Outlets, such as light fittings and wall sockets, comprise a counterpart for the plug connector of the cable harness. This counterpart may be positioned e.g. on the side of the outlet or upon it. As the switching operations of the light fittings are implemented by a control logic and separate control-current paths, such as cables with modular plugs, the outlet chain can be controlled extremely efficiently, in addition to which the installation of e.g. light switches becomes much easier, and considerably less material is needed. This is because the switching operation can be implemented in the new system e.g. by connecting an entity formed by a diaphragm switch, a ribbon cable/foil strip and a modular plug to the input of the control logic provided in association with the distribution terminal. The solution according to the invention also allows the number of fuses at the distribution terminal to be reduced closer to the actual need, as the fuse group feeding the light point chain need not be overdimensioned, as no wall socket is inserted in the light point chain as a branch. The new system also needs less cable than the known solutions due to its mostly string-like, unbranching outlet chain. The solution according to the invention also allows the degree of prefabrication to be increased considerably. The big change brought about by the new solution according to the invention is similar to that introduced into the building technique by the manufacture of buildings in prefabricated elements. As compared with the known advanced system comprising microcircuits in light switches, light fittings and controllers, the solution according to the invention provides a cost-effective electric installation system which nevertheless can be controlled at least as efficiently as the known system, because there is no need to include intelligence, that is, microcircuits, in the outlet chain itself. As to its costs, the new system is therefore also suitable for normal uses, i.e. for ordinary apartments or the like, where there is no greater need to modify the operating instructions of the switching means, although this is also possible, since a terminal equipment, such as a microcomputer, provided with a suitable specifying software, is connected in the control unit of the distribution terminal, preferably implemented by miniature logic. The above-mentioned known bus-based system containing intelligence is also more liable to damage and disturbance than the system according to the invention, where the outlet chains comprise as components mainly only outlets passive in nature and cable harnesses interconnecting the outlets. According to the Applicant's observations, the amount of required installation material, such as energy transfer cable, can be decreased considerably. The length of cable required by a one-family house of ordinary size is reduced from about 600 m to less than 300 m. Further according to the Applicant's observations, less than 100 m of ribbon cable used as the control-current path is needed. As compared with the system utilizing microcircuit technique and positioning the energy transfer and control current path in the same cable, a special advantage of the solution according to the invention is that the implementation of the system is not dependent on any specific control system and its availability, but the system and particularly its control unit can be selected from among the commercially available, technically appropriate logic systems of suitable size and price. The system according to the invention also allows a conventional installation system and the new system to be used simultaneously. As the outlet chains and control current paths are separate from each other, they can be wired independently of each other.

In the following the invention will be described more closely with reference to the attached drawings, in which
Figure 1 shows a floor plan and wiring diagram for a building;
Figure 2 is a block diagram of an electric installation system;
Figure 3 is a top view of a cable harness;
Figure 4 shows a cable harness and a control current path separate from it;
Figure 5 shows a junction point between two cables harnesses;
Figures 6 and 7 show a wall socket provided with counterparts for a plug connector;
Figure 8 shows a light point provided with counterparts for a plug connector;
Figure 9 illustrates the installation of a diaphragm switch controlling a light point upon a wall structure.

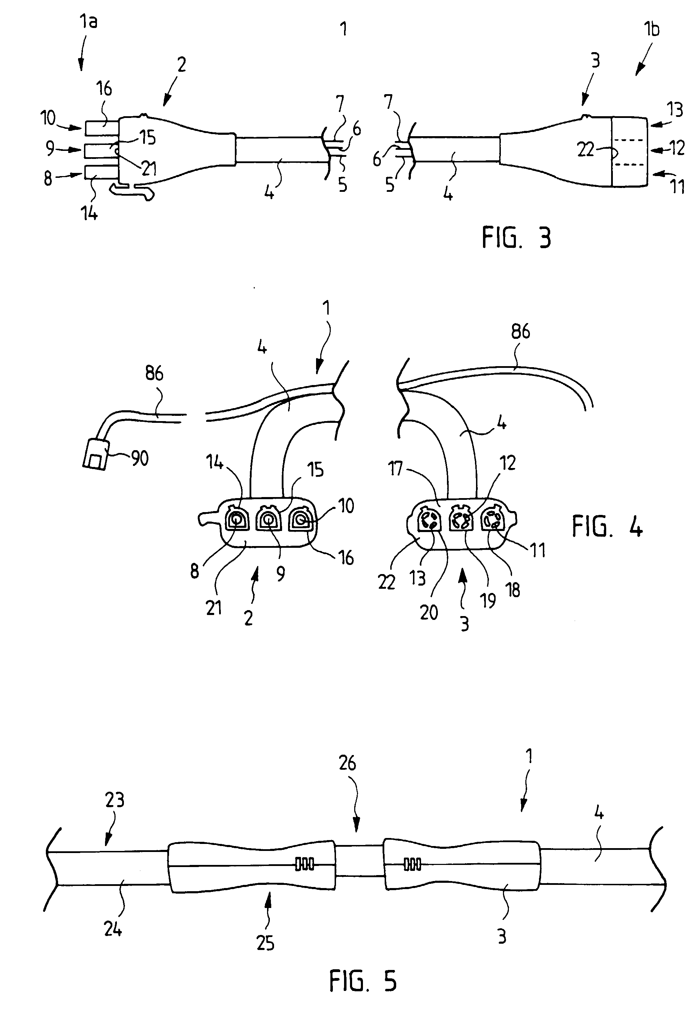

Referring first to Figures 3 and 4, the structure of the cable harness will be described. The cable harness 1 comprises two plug connectors 2 and 3, and an interconnecting cable 4, which includes conductors 5, 6 and 7. A control current path 86 does not form part of the cable harness 1, but in certain cases it can be connected to it e.g. by a bundle clamp. A first plug connector 2, i.e. a male plug connector 2 comprises connector pins 8, 9 and 10, and a second plug connector 3, i.e. a female plug connector 3 comprises connector pins 11, 12 and 13. A conductor 5 is connected between the connector pins 8 and 11; a conductor 6 is connected between the connector pins 9 and 12; and a conductor 7 is connected between the connector pins 10 and 13. In addition, the first plug connector 2, i.e. the male plug connector 2 comprises walls 14 to 16, within which the connector pins 8, 9 and 10 are positioned. Correspondingly, the second plug connector 3, i.e. the female plug connector 3 comprises a projecting wall 17, which is provided with recesses 18 to 20, within which the connector pins 11 to 13 are positioned. At the factory stage, the conductors 5 to 7 in the cable harness 1 have been cut into a predetermined length, and the plug connectors 2 and 3 included in the end portions la and 1b of the cable harness 1 have been made substantially integral with the cable harness 1. The structure is preferably realized by casting in mould, so that the plug connectors 2 and 3 at the end portions of the cable harness 1 and the conductors 5 to 7 of the cable harness with their connector pins have been cast into a single unit that cannot be disassembled. The cable harness can be produced industrially so that e.g. a 5-conductor cable cut into a predetermined length according to the floor plan and wiring diagram of the building, i.e. its individual conductors are provided with connector pins, whereafter the cable is positioned between two moulds and the plug connector is cast at both ends of the cable around the connector pins. A cable harness made in this way has excellent production and installation properties.

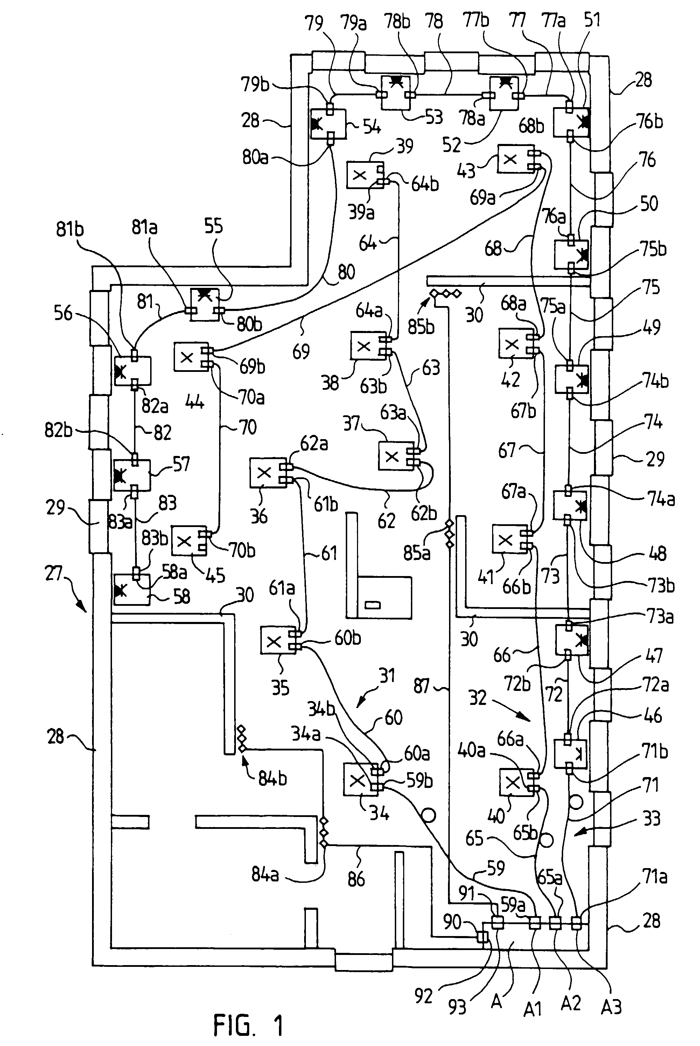

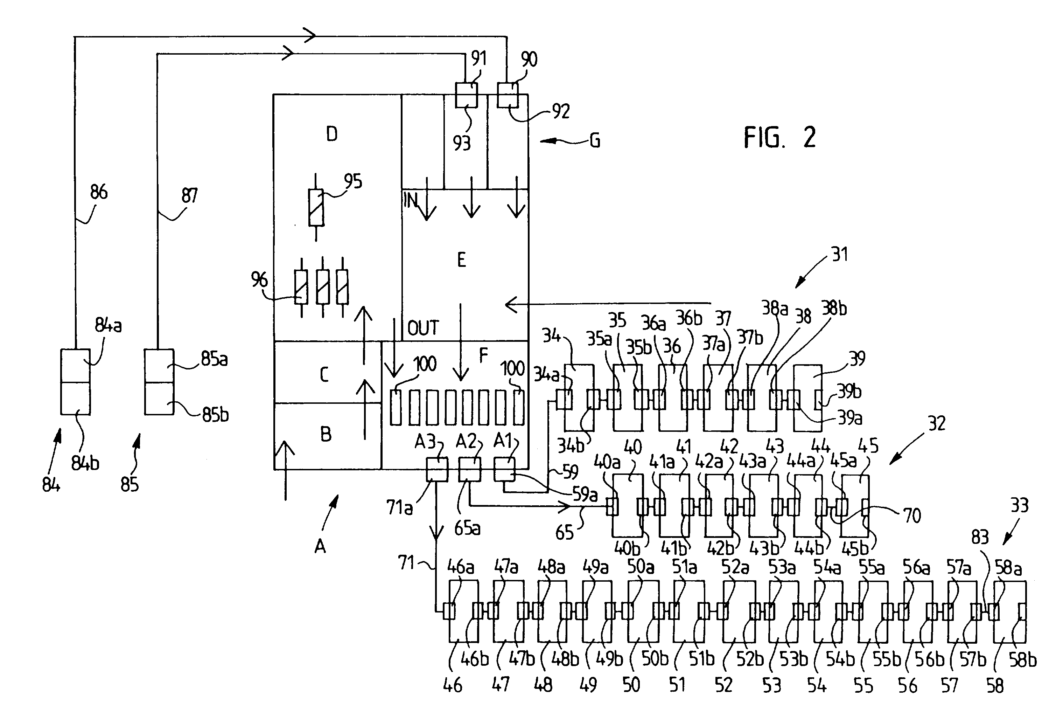

When the cable harnesses, such as the cable harness 1, are connected to a distribution terminal A shown in Figures 1 and 2, and the cable harnesses shown in Figures 3 to 5 are intended for a single-phase system, the outermost connector pins 8 and 11 and the conductor 5 are connected to zero potential, the connector pins 9 and 12 in the middle and the conductor 6 are connected to ground potential, and the other outermost connector pins 10 and 13 are connected to single-phase potential.

The first plug connector 2 also comprises a planar surface 21 and the second plug connector 3 a planar surface 22, by means of which mating connectors in different cable harnesses bear against each other and interlock, as shown in Figure 5. Figure 5 shows the first plug connector 2 of one cable harness 1 and a plug connector 25 in a cable 24 of another cable harness 23. Reference numeral 26 indicates the junction. At the junction 26 the connector pins of the different cable harnesses 1 and 23 are interconnected, thus completing an electric connection and continuing the chain of outlets for the transfer of energy.

Figure 1 shows the floor plan and wiring diagram of a building 27. The diagram actually shows the floor plan of the lower floor of a one-family house. Building 27 comprises an outer wall structure 28, several windows 29, and several partition wall structures 30. In the example of Figure 1, the building comprises three outlet chains 31, 32 and 33, all of which are connected to the distribution terminal A of the building, which is connected to the mains. Outlet chain 31 comprises 6 light points 34 to 39; outlet chain 32 also comprises 6 light points 40 to 45, and outlet chain 33 comprises 13 wall sockets 46 to 58. In addition to the light points 34 to 39, outlet chain 31 comprises cable harnesses 59 to 64, which connect the light points to the distribution terminal A and to each other. Correspondingly, outlet chain 32 comprises, in addition to the light points 40 to 45, cable harnesses 65 to 70, which connect the light points to the distribution terminal A and to each other. Outlet chain 33 including the wall sockets 46 to 58 comprises cable harnesses 71 to 83, which connect the wall sockets 46 to 58 to the distribution terminal A and successively to each other.

As Figure 1 actually shows the lower floor of a 2-storey one-family house, the outlet chains 31 and 32 of the light points are positioned in the floor between the storeys of the building. The outlet chain 33 of wall sockets 46 to 58 in turn is positioned in the wall structure, even though it is shown in Figure 1 in the inner space of the building for the sake of clarity. With a prefabricated house, the cable harnesses 59 to 64, 65 to 70 and 71 to 83 and, if required, even the light points 34 to 39, 40 to 45, the wall sockets 46 to 58 and the distribution terminal A can be positioned within the building elements already at the element factory. In such a case, the only electric installation required for the outlet chains 31 to 33 is to interconnect the different cable harnesses at the junctions of building elements by connecting the plug connectors together as shown in Figure 5.

Cable harnesses 59 to 64, 65 to 70, 71 to 83 can also be positioned in the structures of the building on the building site. Cable harnesses for lighting can thus be positioned e.g. in the intermediate floor of the building, or with a one-storey building, in the upper floor. Cable harnesses 71 to 83 for the outlet chain 33 of wall sockets 46 to 58 can be positioned close to the lower guide member of the wall structure, called a lower waling, in a space formed behind the skirting board.

Outlet chain 31, 32 for light points 34 to 39, 40 to 45 and outlet chain 33 for wall sockets 46, 58 is substantially string-shaped, which appears particularly from Figures 1 and 2. The string shape means above all that there are no side branches, i.e. that outlet chains 31 to 33 form a kind of continuous cable harness wiring without side branches to wall sockets or light points or switches. Outlets 34 to 58 thus form part of the actual string-like outlet chains 31 to 33.

In Figures 1 and 2, the cable harnesses 59 to 64 in the outlet chain 31 for light points 34 to 39 comprise plug connectors 59a to 64a and 59b to 64b. Light points or outlets 34 to 39 in the outlet chain 31, in turn, comprise counterparts 34a to 39a and 34b to 39b for the plug connectors 59a to 64a and 59b to 64b of cable harnesses 59 to 64. Correspondingly, cable harnesses 65 to 70 in the outlet chain 32 of the light points 40 to 45 comprise plug connectors 65a to 70a and 65b to 70b. Light points or outlets 40 to 45 in the outlet chain 32, in turn, comprise counterparts 40a to 45a and 40b to 45b for the plug connectors 65a to 70a and 65b to 70b of cable harnesses 65 to 70. Correspondingly, cable harnesses 71 to 83 in the outlet chain 33 of the wall sockets 46 to 58 comprise plug connectors 71a to 83a and 71b to 83b. Wall sockets or outlets 46 to 58 in the outlet chain 33, in turn, comprise counterparts 46a to 58a and 46b to 58b for the plug connectors 71a to 83a and 71 to 83b of cable harnesses 71 to 83. The counterparts 34a to 39a, 34b to 39b, 40a to 45a and 40b to 45b for the plug connectors of cables harnesses 59 to 64 and 65 to 70 for light point chains 31 and 32 at light points 34 to 39 and 40 to 45 are integral with the light point structure; correspondingly, the counterparts 46a to 58a and 46b to 58b for the plug connectors of cable harnesses 71 to 83 of wall socket chains 33 at wall sockets 46 to 58 are integral with the wall socket structure 46 to 58, whereby cable harnesses 59 to 83 can be directly plugged into the outlets or light points 34 to 39, 40 to 45 and to wall sockets 46 to 58, preferably to their side, which is an easy way from the installation point of view. As shown in Figure 1, the counterparts contained in the outlets or light points 34 to 39 and 40 to 45 and wall sockets 46 to 58 for the plug connectors of the cable harnesses form part of the primarily current path of the outlet chains 31 to 33, so that the counterparts of the plug connectors also form part of the string-like, unbranching outlet chain 31 to 33, which embodiment further reduces the need of wiring. In the drawings, for the sake of clarity, the reference numerals of the plug connectors 59a to 83a of the cable harnesses are mainly shown only in Figure 1, and the reference numerals of the counterparts 34a to 58a of the outlets mainly only in Figure 2.

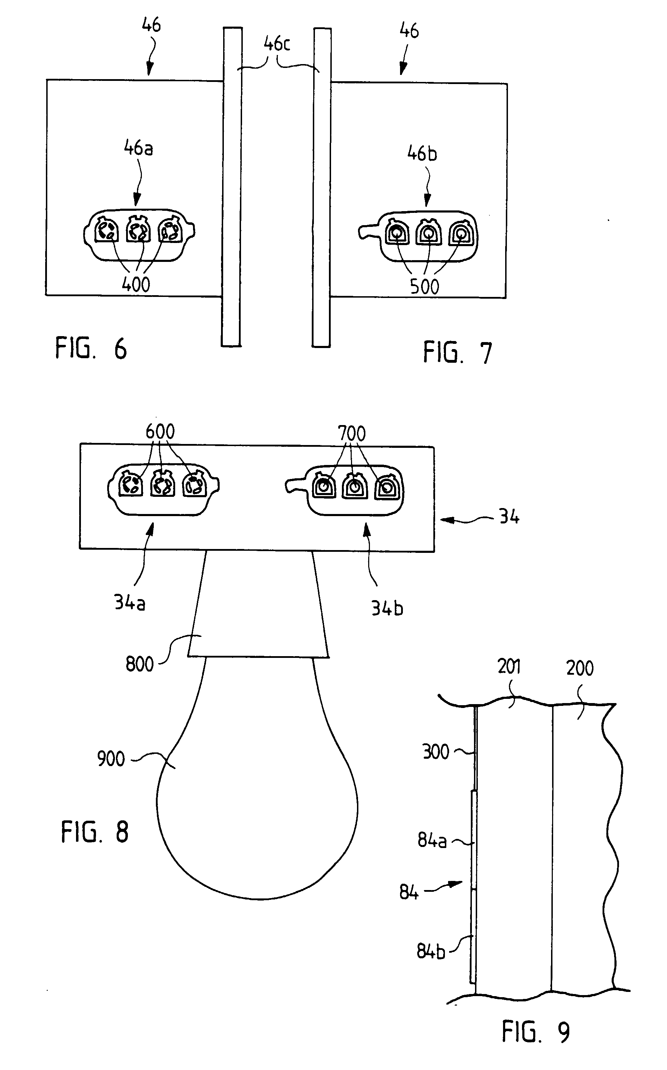

Figures 6 and 7 show an individual wall socket, such as wall socket 46 shown in Figure 1. The wall socket 46 comprises a counterpart 46a for the plug connector 71b of the cable harness 71 and a counterpart 46b for the plug connector 72a of the cable harness 72. With wall sockets, the counterparts 46a and 46b are formed in the preferred embodiment on different sides, preferably on opposite sides, of the wall socket 46. This embodiment has the shortest installation time. In Figures 6 and 7, the wall socket 46 further comprises a front plate 46c, by the back edge of which the wall socket will be positioned against a wall surface. In Figure 6, the first counterpart 46a of the wall socket 46 comprises connector pins 400 and the second counterpart 46b comprises connector pins 500.

In a preferred embodiment, particularly with light points, the structure shown in Figures 8 and 1 is such that a counterpart 34a for the plug connector 59b of the cable harness 59 and a counterpart 34b for the plug connector 60a of the cable harness 60 in the light point 34, for instance, are formed on the same side of the outlet, here the light point. In the case of a light point, this embodiment is to be preferred, as a light point installed in this way is easier to disconnect and replace, if required. From the viewpoint of the mould costs of the manufacturing process, this way is easier and cheaper. In Figure 8, the first counterpart 34a included in the light point 34 comprises connector pins 600 and the second counterpart 34b comprises connector pins 700. Further in Figure 8, the light point 34 comprises a light bulb 800 and a bulb socket 900.

Referring to Figures 1 and 2, the distribution terminal A feeding the cable-harness-type outlet chains 31 to 33 comprises counter connectors Al, A2 and A3, into which the plug connectors 59a, 65a and 71a of the cable harnesses 59, 65 and 71 can be fitted. This is a new and easy way of completing a connection between a distribution terminal and outlet chains.

Referring to Figure 1, in the preferred embodiment, the length of the string-like, unbranching portion of the cable harnesses 59 to 83 of the outlets 34 to 58 is at least 90% of the total length of the outlet chains, whereby the system retains its perfect string-shape with a single main line, which allows cable harnesses to be used and the switching operations to be controlled. As a matter of fact, the solution shown in Figure 1 has no sideward branches.

Energy to the light points 34 to 45 and wall sockets 46 to 58 is preferably transferred along the cable harnesses 59 to 70 and 71 to 83 of the different outlet chains 31, 32 and 33 so that the cable harnesses 34 to 45 of the light points 31, 32 in the outlet chain 31, 32 are not connected with the wall sockets 46 to 58 of the outlet chain 33, as the light points 34 to 45 thus form a separate group, the switching operations of which will not disturb the operation of devices, such as computers, plugged into the wall sockets 46 to 58 through inductive disturbance peaks, for instance. A special advantage of this embodiment is that the power supply capacity of the outlet chains 31 and 32 of light points 34 to 45, i.e. the number of fuses, need not be drastically overdimensioned on account of the wall sockets, as is the case today.

It further appears from Figure 1 that the cable harnesses 59 to 83 of the outlet chains 31 to 33 have modular dimensions and comprise no more than ten different lengths. In Figure 1, there are, in fact, no more than six different lengths. This embodiment reduces the need of producing and storing cable harnesses of different lengths and speeds up the installation, as a cable of a certain length can be fitted at several alternative points.

Figure 2 is a block diagram illustrating the electric installation system. The distribution terminal A of the system shown in Figure 2 comprises a power supply unit B, a power measuring unit C, a fuse protection unit D, a control unit E, and a power control and distribution unit F and an input unit G for the control unit. It further appears from Figure 2 that the system comprises a first outlet chain 31 for light points 34 to 39, a second outlet chain for light points 40 to 45, and a third outlet chain 33 for wall sockets 46 to 58. The outlets of the outlet chains are connected to each other and to the power control and distribution unit F of the distribution terminal A by means of cable harnesses 59 to 64, 65 to 70 and 71 to 83, thus forming the string-like outlet chains 31 to 33 without branches.

Referring to Figures 1 and 2, the system further comprises switching means 84 and 85. The switching means 84 connected to control the outlet chain 31 of the light points 34 to 39 comprises two switch units or push-buttons 84a and 84b, which are connected to the input G of the control unit E. The switching means 85 connected to control the outlet chain 32 of the light points 40 to 45 comprises two switch units or push-buttons 85a and 85b, which are connected to the input G of the control unit E. The switching means 84 and 85 are connected to the input G of the control unit E by means of control current paths 86, 87, preferably by ribbon cables 86 and 87, which may be e.g. 6-conductor ribbon cables. The control current path 86 and 87, preferably a ribbon cable or the like, connected to the switching means 84 and 85, respectively, is connected to the control unit positioned at the distribution terminal A by means of its modular plug 90 and 91, respectively. The control unit E, more specifically the input unit of the control unit E, comprises a counter connector 92 and 93 for the modular plugs of the control current paths 86 and 87, respectively. Similarly as the cable harnesses, the control current paths, i.e. the ribbon cables 86, 87 have been cut into predetermined lengths at the factory and provided with fixed connectors, such as modular plugs.

In Figure 2, the external current transfer network of the building is connected to the power supply unit B, from where the energy is transferred through the power measuring unit C to the fuse protection unit D, which comprises e.g. a 25A main fuse 95 and several group fuses 96 of e.g. 16A. The miniature logic i.e. control unit E controls relays 100 or the like power switches included in the power control and distribution unit F on the basis of switches 84 and 85, whereby the control unit E i.e. the miniature logic controls the switching of current to the light point chains 31 and 32 on the basis of the switches 84, 85 and the set values of the logic E by means of the relays 100. In Figure 2, the thicker arrows indicate power current i.e. energy transfer and the thinner arrows indicate control current.

The switching means 84 and 85 are thus connected to perform switching operations over the control current path 86 and 87, respectively, galvanically (electrically) and physically separate from the outlet chain 31 of the light points 34 to 39 and the outlet point chain 32 of the light points 40 to 45 and through the control unit E. The switching means 84 and 85 and the control current path separate from the cable-harness outlet chains 31 and 32, respectively, for the energy transfer of the light points are connected through the control unit E, preferably miniature logic, at the distribution terminal A to control the cable-harness outlet chain 31 and 32, respectively, plugged into the counter connector Al of the plug connector at the distribution terminal A.

As appears from Figure 4 showing a cable harness, the control current path 86 physically separate from the cable harness and comprising a separate protective sheath 86, such as the ribbon cable 86, can be fastened, if desired, e.g. by a bundle clamp to the cable harness used in the energy transfer of the outlet chain. The modular plug 90 is positioned at one end of the control current path 86. The other end of the control current path, i.e. the ribbon cable 84 can be attached to the diaphragm push-button switch 84 shown in Figures 1, 2 and 9.

Figure 9 illustrates the installation of the diaphragm push-button switch 84 controlling a light fitting upon a wall structure. Referring to Figures 1 and 2 and particularly to Figure 9, in a preferred embodiment, the switching means 84 and 85 of the light point chain 31 and 32, respectively, are formed by diaphragm push-button switches, which have a very small installation depth, as compared with known light switches. The height or installation depth of the diaphragm push-button switch 84, for instance, is of the order of 0.2 to 1.0 mm. Besides the diaphragm switch 84, Figure 9 also shows a wall structure having a frame 200 and a panelling 201, such as a gypsum board or chipboard 13 mm in thickness, positioned upon the frame. The diaphragm push-button switch 84 is installed upon the panelling 201. As appears from Figure 9, the thin diaphragm push-button switch 84 is attached to a thin foil cable 300, which is used as a control current path and is directed upwards towards the ceiling, where it can be attached behind the wall structure or ceiling by a modular plug connection e.g. to a ribbon cable of the kind described above and also used as a control current path.

Even though the invention has been described above with reference to the examples of the attached drawings, it is obvious that the invention is not limited to them, but it may be modified in many ways within the scope of the attached claims.

## Claims

1. Electric installation system for a building or a portion of a building, comprising a distribution terminal (A) and one or more chains of outlets (31, 32, 33) connected to the distribution terminal, each chain of outlets (31 to 33) comprising several outlets (34 to 39, 40 to 45, 46 to 58) and cable sections (59 to 64, 65 to 70, 71 to 83) for connecting the outlets to each other and to the distribution terminal (A), in which system the outlets are e.g. wall sockets (46 to 58) and light points (34 to 39, 40 to 45) and which system further comprises switching means (84, 84a to 84b, 85, 85a to 85b) for performing the switching operations of at least the light points (34 to 39, 40 to 45), said switching means (84, 84a to 84c, 85a to 85c) being connected to perform switching operations through a control current path (86, 87) and additionally through a control unit (E), **characterized** in that the cable sections in the chains of outlets (31, 32, 33) are formed by industrially produced cable harnesses (59 to 64, 65 to 70, 71 to 83) cut into predetermined lengths and provided with fixed plug connectors (59a to 83a, 59b to 83a), and that the control current path (86, 87) is separate from the cable harness and provided with a separate protective sheath, and that the switching means (84, 85) and the control current path (86, 87), which are separate from the cable-harness-structure chain of outlets (31, 32) for energy transfer to the light points (34 to 39, 40 to 45), are connected to control the cable-harness-structure chain of outlets (31, 32) connected to the distribution terminal (A) through the control unit (E) at the distribution terminal (A), and in which installation system the control unit (E) controls the switching of current to the light point chains (31 and 32) on the basis of set values of the control unit (E) by means of relays (100) or the like power switches.

2. System according to claim 1, **characterized** in that the cable-harness-structure chain of outlets (31, 32) for the light points (34 to 39, 40 to 45) and the cable-harness-structure chain of outlets (33) for the wall sockets (46 to 58) are substantially string-shaped.

3. System according to claim 1, **characterized** in that the control unit (E) is a miniature logic.

4. System according to claim 1, **characterized** in that the outlets (34 to 39, 40 to 45, 46 to 58), preferably the wall sockets (46 to 58) and the light points (34 to 39, 40 to 45), in the chain of outlets (31 to 33) comprise a counterpart (34a to 45a, 34b to 45b, 46a to 58a, 46b to 58b) for each plug connector of the cable harness (59 to 64, 65 to 70, 71 to 83) to be connected to the outlet, and that the counterparts (34a to 45b, 34b to 45b, 46a to 58a, 46b to 58b) for the plug connectors are integral with the outlets (34 to 39, 40 to 45, 46 to 58).

5. System according to claim 4, **characterized** in that the counterparts (34a to 45a, 34b to 45b, 46a to 58a, 46b to 58b) included in the outlets for the plug connectors of the cable harness (59 to 64, 65 to 70, 71 to 83) form part of the primary current path of the chain of outlets.

6. System according to claim 4, **characterized** in that the counterparts (34a to 45b, 34b to 45b, 46a to 58a, 46b to 58b) included in the outlets for the plug connectors of the cable harness (59 to 64, 65 to 70, 71 to 83) are formed on the same side of the outlet.

7. System according to claim 2, **characterized** in that the string-like, unbranching section of the cable harnesses (59 to 64, 65 to 70, 71 to 83) of the chains of outlets is at least 90% of the total length of the chain of outlets.

8. System according to claim 1, **characterized** in that energy is transferred to the light points (34 to 39, 40 to 45) and wall sockets (46 to 58) along the cable harnesses of the chains of outlets (31, 32, 33) so that the cable harnesses (59 to 64, 65 to 70) of the light points (34 to 39, 40 to 45) in the chain of outlets (31, 32) are separate from the wall sockets (46 to 58).

9. System according to claim 1, **characterized** in that the cable harnesses (59 to 64, 65 to 70, 71 to 83) of the chain of outlets (31 to 33) have modular dimensions and comprise no more than ten different lengths.

10. System according to claim 1, **characterized** in that the switching means (84, 85) of the chain of light points (31, 32) are diaphragm push-button switches.

11. System according to claim 1, **characterized** in that the control current path (86, 87), preferably a ribbon cable/foil strip or the like, connected to the switching means (84, 85) is connected to the control unit (E) provided in association with the distribution terminal (A) by means of a modular plug (90, 91) included in it.

## Patentansprüche

1. Elektrisches Installationssystem für ein Gebäude oder einen Teil eines Gebäudes mit einem Verteilungsanschluß (A) und einer oder mehreren Anschlußketten (31, 32, 33), die mit dem Verteilungsanschluß verbunden sind, wobei jede Anschlußkette (31 bis 33) verschiedene Anschlüsse (34 bis 39, 40 bis 45, 46 bis 58) und Kabelabschnitte (59 bis 64, 65 bis 70, 71 bis 83) aufweist, um die Anschlüsse miteinander und mit dem Verteilungsanschluß (A) zu verbinden, wobei bei dem System die Anschlüsse zum Beispiel Wandsteckdosen (46 bis 58) und Lichtbrennstellen (34 bis 39, 40 bis 45) sind und wobei das System weiterhin Schaltvorrichtungen (84, 84a bis 84b, 85, 85a bis 85b) zur Durchführung der Schaltvorgänge zumindest an den Lichtbrennstellen (34 bis 39, 40 bis 45) aufweist, wobei die Schaltvorrichtungen (84, 84a bis 84c, 85a bis 85c) so angeschlossen sind, daß sie Schaltvorgänge über einen Steuerstrompfad (86, 87) und zusätzlich über eine Steuereinheit (E) durchführen,
dadurch gekennzeichnet,
daß die Kabelabschnitte in den Anschlußketten (31, 32, 33) durch industriell hergestellte Kabelbäume (59 bis 64, 65 bis 70, 71 bis 83) gebildet sind, welche in bestimmte Längen geschnitten sind und mit festen Steckverbindern (59a bis 83a, 59b bis 83a) versehen sind, und
daß der Steuerstrompfad (86, 87) separat von dem Kabelbaum ist, und mit einer separaten Schutzhülle versehen ist und
daß die Schaltvorrichtungen (84, 85) und der Steuerstrompfad (86, 87), welche separat von der kabelbaumartigen Struktur der Anschlußketten (31, 32) zur Energieübertragung an die Lichtbrennstellen (34 bis 39, 40 bis 45) sind, so verbunden sind, daß sie die kabelbaumartige Struktur der Anschlußketten (31, 32), die mit dem Verteilungsanschluß (A) verbunden sind, über die Steuereinheit (E) an dem Verteilungsanschluß (A) steuern, wobei bei dem Installationssystem die Steuereinheit (E) das Schalten vom Strom an die Lichtbrennstellketten (31 und 32) auf der Grundlage von festgesetzten Werten der Steuereinheit (E) mittels Relais (100) oder ähnlichen Leistungsschaltern steuert.

2. System nach Anspruch 1, dadurch gekennzeichnet, daß die kabelbaumartige Struktur der Anschlußketten (31, 32) für die Lichtbrennstellen (34 bis 39, 40 bis 45) und die kabelbaumartige Struktur der Anschlußketten (33) für die Wandsteckdosen (46 bis 58) im wesentlichen ringförmig sind.

3. System nach Anspruch 1, dadurch gekennzeichnet, daß die Steuereinheit (E) eine Miniaturlogik ist.

4. System nach Anspruch 1, dadurch gekennzeichnet, daß die Anschlüsse (34 bis 39, 40 bis 45, 46 bis 58) und hier bevorzugt die Wandsteckdosen (46 bis 58) und die Lichtbrennstellen (34 bis 39, 40 bis 45) in der Anschlußkette (31 bis 33) ein Gegenstück (34a bis 45a, 34b bis 45b, 46a bis 58a, 46b bis 58b) für jeden Steckverbinder eines mit dem Anschluß zu verbindenden Kabelbaumes (59 bis 64, 65 bis 70, 71 bis 83) aufweisen und daß die Gegenstücke (34a bis 45b, 34b bis 45b, 46a bis 58a, 46b bis 58b) für die Steckverbinder einstückig mit den Anschlüssen (34 bis 39, 40 bis 45, 46 bis 58) sind.

5. System nach Anspruch 4, dadurch gekennzeichnet, daß die Gegenstücke (34a bis 45a, 34b bis 45b, 46a bis 58a, 46b bis 58b), die in den Anschlüssen für die Steckverbinder der Kabelbäume (59 bis 64, 65 bis 70, 71 bis 83) enthalten sind, einen Teil des primären Strompfades der Anschlußketten bilden.

6. System nach Anspruch 4, dadurch gekennzeichnet, daß die Gegenstücke (34a bis 45a, 34b bis 45b, 46a bis 58a, 46b bis 58b), die in den Anschlüssen für die Steckverbinder der Kabelbäume (59 bis 64, 65 bis 70, 71 bis 83) enthalten sind, auf der gleichen Seite des Anschlusses ausgebildet sind.

7. System nach Anspruch 2, dadurch gekennzeichnet, daß ein strangartiger, nicht verzweigter Abschnitt der Kabelbäume (59 bis 64, 65 bis 70, 71 bis 83) in den Anschlußketten zumindest 90% der Gesamtlänge der Anschlußketten ausmacht.

8. System nach Anspruch 1, dadurch gekennzeichnet, daß Energie an die Lichtbrennstellen (34 bis 39, 40 bis 45) und Wandsteckdosen (46 bis 58) entlang der Kabelbäume der Anschlußketten (31, 32, 33) übertragen wird, so daß die Kabelbäume (59 bis 64, 65 bis 70) der Lichtbrennstellen (34 bis 39, 40 bis 45) in den Anschlußketten (31, 32) separat von den Wandsteckdosen (46 bis 58) sind.

9. System nach Anspruch 1, dadurch gekennzeichnet, daß die Kabelbäume (59 bis 64, 65 bis 70, 71 bis 83) der Anschlußketten (31 bis 33) modulare Abmessungen haben und nicht mehr als zehn unterschiedliche Längen haben.

10. System nach Anspruch 1, dadurch gekennzeichnet, daß die Schaltvorrichtungen (84, 85) in der Kette der Lichtbrennstellen (31, 32) Membran-Drucktastenschalter sind.

11. System nach Anspruch 1, dadurch gekennzeichnet, daß der Steuerstrompfad (86, 87), bevorzugt in Form eines Bandkabel/Folienstreifens oder dergleichen, der mit den Schaltvorrichtungen (84, 85) verbunden ist, mit der Steuereinheit (E), welche zusammen mit dem Verteilungsanschluß (A) angeordnet ist, mittels eines modularen, in ihm enthaltenen Stecker (90, 91) verbunden ist.

## Revendications

1. Système d'installation électrique pour un bâtiment ou une partie d'un bâtiment, comprenant un terminal de distribution (A) et une ou plusieurs chaînes de prises (31,32,33) connectées au terminal de distribution, chaque chaîne de prises (31 à 33) comprenant plusieurs prises (34 à 39, 40 à 45, 46 à 58) et des sections de câbles (59 à 64, 65 à 70, 71 à 83) pour raccorder les prises entre elles et au terminal de distribution (A), système dans lequel les prises sont par exemple des prises murales (46 à 58) et des points d'éclairage (34 à 39, 40 à 45), et qui comprend en outre des moyens de commutation (84,84a et 84b,85,85a et 85b) pour exécuter des opérations de commutation au moins des points d'éclairage (34 à 39, 40 à 45), lesdits moyens de commutation (84, 84a à 84c, 85a à 85c) étant connectés de manière à exécuter des opérations de commutation au moyen d'un trajet de courant de commande (86,87) et en outre au moyen d'une unité de commande (E), caractérisé en ce que les sections de câble dans les chaînes de prises (31,32,33) sont formées par des faisceaux de câbles produits industriellement (59 à 64, 65 à 70, 71 à 83) découpés à des longueurs prédéterminées et pourvus de connecteurs (59a à 83a, 59b à 83b) et que le trajet de courant de commande (86,87) est séparé du faisceau de câbles et est pourvu d'une gaine protectrice séparée, et que les moyens de commutation (84,85) et le trajet de courant de commande (86,87), qui sont séparés de la chaîne de prises (31,32) formant structure à faisceaux de câbles pour le transfert d'énergie en direction des points d'éclairage (34 à 39, 40 à 45), sont connectés à la chaîne de prises (31,32), qui possède la structure à faisceaux de câbles et est connectée au terminal de distribution (A) par l'intermédiaire de l'unité de commande (E) au niveau du terminal de distribution (A) et dans lequel système d'installation l'unité de commande (E) commande la commutation du courant vers la chaîne (31 et 32) de points d'éclairage sur la base de valeurs réglées de l'unité de commande (E) au moyen de relais (100) ou d'interrupteurs de puissance similaires.

2. Système selon la revendication 1, caractérisé en ce que la chaîne de prises (31,32) formant structure à faisceaux de câbles pour les points d'éclairage (34 à 39, 40 à 45) et la chaîne de prises (33) formant structure à faisceaux de câbles pour les prises murales (46 à 58) sont réalisées essentiellement sous la forme d'un cordon.

3. Système selon la revendication 1, caractérisé en ce que l'unité de commande (E) est une logique miniature.

4. Système selon la revendication 1, caractérisé en ce que les prises (34 à 39, 40 à 45, 46 à 58), de préférence les prises murales (46 à 58) et les points d'éclairage (34 à 39, 40 à 45), dans la chaîne de prises (31 à 33) comprennent une pièce antagoniste correspondante (34a à 45a, 34b à 45b, 46a à 58a, 46b à 58b) pour chaque connecteur du faisceau de câbles (59 à 64, 65 à 70, 71 à 83) devant être connecté à la prise, et que les pièces antagonistes correspondantes (34a à 45a, 34b à 45b, 46a à 58a, 46b à 58b) pour les connecteurs sont solidaires des prises (34 à 39, 40 à 45 et 46 à 58).

5. Système selon la revendication 4, caractérisé en ce que les pièces antagonistes correspondantes (34a à 45a, 34a à 45b, 46a à 58a, 46b à 58b) contenues dans les prises pour les connecteurs du faisceau de câbles (59 à 64, 65 à 70, 71 à 83) font partie du trajet de courant primaire de la chaîne de prises.

6. Système selon la revendication 4, caractérisé en ce que les pièces antagonistes correspondantes (34a à 45a, 34a à 45b, 46a à 58a, 46b à 58b) contenues dans les prises pour les connecteurs du faisceau de câbles (59 à 64, 65 à 70, 71 à 83) sont formées du même côté de la prise.

7. Système selon la revendication 2, caractérisé en ce que la section de débranchement en forme de chaîne des faisceaux de câbles (59 à 64, 65 à 70, 71 à 83) des chaînes de prises s'étend sur au moins 90 % de la longueur totale de la chaîne de prises.

8. Système selon la revendication 1, caractérisé en ce qu'une énergie est transférée aux points d'éclairage (34 à 39, 40 à 45) et aux prises murales (46 à 58) le long des faisceaux de câbles des chaînes de prises (31,32,33) de sorte que les faisceaux de câbles (59 à 64, 65 à 70) des points d'éclairage (34 à 39, 40 à 45) dans la chaîne de prises (31,32) sont séparés des prises murales (46 à 58).

9. Système selon la revendication 1, caractérisé en ce que les faisceaux de câbles (59 à 64, 65 à 70, 71 à 83) des chaînes de prises (31 à 33) ont des dimensions modulaires et ne comprennent pas plus de dix longueurs différentes.

10. Système selon la revendication 1, caractérisé en ce que les moyens de commutation (84,85) de la chaîne de points d'éclairage (31,32) sont des interrupteurs à boutons-poussoirs à diaphragme.

11. Système selon la revendication 1, caractérisé en ce que le trajet de courant de commande (86,87) est de préférence un câble en forme de ruban / une bande en forme de feuille ou analogue, connecté aux moyens de commutation (84,85), est connecté à l'unité de commande (E) prévue en association avec le terminal de distribution (A), au moyen d'une broche modulaire (90,91) contenue dans cette unité.
